# FASCICULE DE BREVET EUROPEEN

(11) **EP 1 160 069 B1**
(45) Date de publication et mention de la délivrance du brevet: **17.11.2004**
(21) Numéro de dépôt: 01111755.3
(22) Date de dépôt: 15.05.2001
(51) Int. Cl.: B29C 33/10, B29C 33/40

(54) **Moule de pneumatique et procédé favorisant l'éventation d'un moule de pneumatique**
Reifenformwerkzeug und Verfahren zur Erleichterung der Entlüftung eines Reifenformwerkzeuges
Tyre mould and process for facilitating the venting of a tyre mould

(30) Priorité: 02.06.2000 FR 0007124
(43) Date de publication de la demande: 05.12.2001
(73) Titulaire: Sociéte de Technologie Michelin, 63000 Clermont-Ferrand Cedex 09 (FR); Michelin Recherche et Technique S.A., 1763 Granges-Paccot (CH)
(72) Inventeur: Lavialle, Georges, 63160 Billom (FR)
(74) Mandataire: Diernaz, Christian

(56) Documents cités:
- DE-A- 2 608 054
- GB-A- 840 883
- GB-A- 2 210 576

## Description

L'invention concerne un moule pour mouler des pneumatiques et plus particulièrement un moule améliorant la qualité du moulage de la surface extérieure des pneumatiques; elle concerne également un procédé permettant d'améliorer l'éventation d'un moule de pneumatique.

Le moulage d'un pneumatique dans un moule formé d'une pluralité de pièces métalliques et pourvu sur sa surface de moulage d'une pluralité de parties faisant saillie, est une opération délicate qui nécessite de devoir évacuer l'air qui est emprisonné entre un bandage (c'est-à-dire un pneumatique dans son état non moulé et non vulcanisé) et ledit moule. Dès lors que la totalité de l'air emprisonné n'est pas évacué, il y a un risque de formation de défauts de moulage de la surface du pneumatique (par exemple présence de cavités sur la surface du pneumatique et/ou de parties non moulées). Parfois et même sans que cela soit visible sur la surface du pneumatique, il est possible que les composants du pneumatique ne soient pas suffisamment appliqués les uns contre les autres avec des pressions de contact appropriées, ce qui peut se traduire par une mauvaise cohésion de l'ensemble et éventuellement par des décollements entre lesdits composants au cours du roulage du pneumatique. Afin de résoudre ce problème d'évacuation d'air et obtenir un moulage satisfaisant, différents artifices ont été développés. Citons par exemple le perçage d'une pluralité d'orifices d'éventation de petite section transversale dans les éléments de moule, ces orifices étant destinés à laisser s'échapper l'air emprisonné sous l'effet de la pression dans le bandage.

Cette solution, bien qu'efficace pour évacuer l'air occlus, conduit cependant à la formation d'une pluralité de "picots" en caoutchouc faisant saillie sur la surface du pneumatique moulé, lesdits picots résultant de la pénétration du mélange de gomme non encore vulcanisé à l'intérieur des orifices d'éventation. Ces picots sont souvent considérés comme des défauts d'aspect de surface et peuvent nécessiter une opération supplémentaire d'enlèvement après moulage pour obtenir une esthétique correcte. On constate en particulier dans le cas de moulage de pneumatiques pour vélo tout terrain comportant une pluralité de motifs de sculpture que l'aspect esthétique est fortement altéré par la présence de ces picots de gomme.

Une solution a été proposée par la demanderesse qui consiste après avoir percé les différentes parties composant un moule avec une pluralité d'orifices à boucher lesdites orifices avec un matériau différent du matériau du moule. Cette dernière technique est particulièrement performante puisqu'elle évite la formation de poils sur les surfaces moulées tout en assurant une éventation appropriée.

Toutefois, le coût de réalisation d'un tel moule est sensiblement augmenté du fait des diverses opérations requises : perçage (souvent dans des zones très difficile d'accès), obturation. Dans le cas de pneumatiques destinés à des véhicules deux roues, les dimensions spécifiques desdits pneumatiques associées aux caractéristiques propres des sculptures utilisées de façon commune pour ces pneumatiques rendent nécessaire la mise au point d'un nouveau moule alliant à la fois un faible coût de réalisation et une éventation satisfaisante de l'air emprisonné entre le bandage et ledit moule sans création de défauts de surface (par l'effet taille, il y a comparativement beaucoup plus de poils sur la surface de roulement d'une bande de roulement d'un pneumatique pour deux roues que pour tout autre type de pneumatique).

Le document GB 840,883 décrit un moule de pneumatique comprenant au moins un élément métallique micro poreux destiné au passage de l'air occlus entre ledit pneumatique et ledit moule. Pour empêcher encrassement des pores au contact direct avec le pneumatique à mouler, il est proposé de revêtir cet élément avec une faible épaisseur d'un matériau non métallique et perméable à l'air, ce revêtement empêchant le bouchage des pores pour maintenir l'efficacité de drainage de l'élément micro poreux. Le surcoût de fabrication du moule décrit dans ce document augmente sensiblement le coût du pneumatique produit et conduit après un plus ou moins grand nombre de moulages à devoir refaire un revêtement.

Le besoin s'est fait sentir d'améliorer la technique de moulage des pneumatiques et en particulier celle des pneumatiques pour véhicules deux roues (V.T.T.) de façon à obtenir un moulage correct et un aspect esthétique également correct sans augmenter le coût de réalisation des moules et à diminuer le coût d'entretien desdits moules.

Le moule selon l'invention, destiné au moulage d'un pneumatique présentant une surface extérieure pourvue d'au moins une sculpture, présente, dans la configuration de moulage, un volume interne délimité par une surface de moulage apte à mouler la surface extérieure du pneumatique, cette surface de moulage étant pourvue d'une pluralité de reliefs pour le moulage de la sculpture sur ladite surface extérieure du pneumatique. Ce moule comporte
- une enveloppe externe de moule ayant une rigidité appropriée pour pouvoir équilibrer les efforts résultant de la mise en pression interne dans le bandage (c'est-à-dire le pneumatique dans sa configuration non moulé et non vulcanisé), ladite pression étant destinée à mouler par pressage le bandage contre la surface de moulage,
- au moins une garniture réalisée dans un élastomère de silicone et disposée à l'intérieur de l'enveloppe externe de moule de façon à remplir au moins une partie du volume interne délimité par l'enveloppe externe, cette garniture présentant une surface de moulage formant une partie au moins de la surface de moulage du moule pour mouler une sculpture sur la surface externe du pneumatique, et il est caractérisé en ce que
- ladite garniture est apte à absorber en quasi totalité l'air occlus entre le pneumatique à mouler et la surface de moulage du moule pendant l'opération de moulage.

Par sculpture, on entend soit une sculpture réalisée sur la bande de roulement d'un pneumatique (c'est-à-dire la partie du pneumatique destinée à venir en contact avec la chaussée), soit une sculpture réalisée sur un flanc de pneumatique.

Par apte à absorber en quasi totalité l'air occlus entre le pneumatique à mouler et la surface de moulage du moule pendant l'opération de moulage, on entend que la capacité à emmagasiner l'air occlus dans l'ensemble des garnitures est sensiblement égale au volume d'air occlus; préférentiellement, cette capacité est supérieure audit volume. Cet air occlus est ensuite évacué naturellement par les interfaces entre lesdites garnitures et l'enveloppe externe du moule et également vers les surfaces libres après démoulage.

Préférentiellement, l'élastomère de silicone utilisé dans la réalisation de la garniture a essentiellement une dureté comprise entre 40 et 60 Shore A. Avantageusement, la dureté est égale à 50 Shore A.

L'utilisation d'un moule tel que défini permet de façon surprenante le moulage et la vulcanisation d'un pneumatique pourvu d'une bande de roulement ayant une sculpture, ce moulage ne présentant pas les défauts de surface que l'on constate habituellement avec des moules n'ayant pas de dispositifs spécifiques éventation ou bien ayant des orifices d'évacuation. En outre, la souplesse du matériau constitutif de la garniture permet un meilleur écoulement de l'air occlus vers des joints du moule formant naturellement des passages d'évacuation.

La garniture selon l'invention peut de manière connue être réalisée par moulage sur un contre moule (par exemple, positif de la sculpture de la bande de roulement du pneumatique); elle peut également être formée d'une pluralité d'éléments s'étendant sur toute la largeur de la bande de roulement et seulement sur une partie de la longueur de cette bande dans le sens circonférentiel, chaque élément se trouvant encadré par deux autres éléments dans le sens circonférentiel dans la configuration de moulage.

Bien entendu, ce qui vient d'être décrit pour la réalisation d'une sculpture de bande de roulement s'applique à l'identique pour le moulage de motifs de sculpture sur les flancs du pneumatique avec les mêmes avantages.

Pour améliorer encore l'évacuation de l'air pendant l'opération de moulage, il est avantageux de réaliser dans le matériau constitutif de la garniture une pluralité de traits de coupe, par exemple au moyen d'un outil coupant afin de créer une sorte de plan de joint fictif dans lequel l'air occlus entre le bandage et ladite garniture peut s'introduire. Ces traits de coupe sont préférentiellement réalisés dans les zones de la garniture qui se trouvent être les plus délicates pour réaliser une évacuation de l'air satisfaisante. Un avantage du moule selon l'invention réside dans le fait que ces traits de coupe peuvent être réalisés à tout moment, notamment après qu'il a été constaté localement un manque d'évacuation d'air.

L'invention sera mieux comprise à l'aide des dessins présentant, vue en coupe, deux formes de réalisation d'un moule selon l'invention :
- la figure 1 montre, vue selon une coupe méridienne, un moule de pneumatique pour véhicule deux roues dans la configuration de moulage;
- la figure 2 montre, en coupe, une partie d'un moule de pneumatique recouvert sur sa surface avec une couche d'élastomère de silicone.

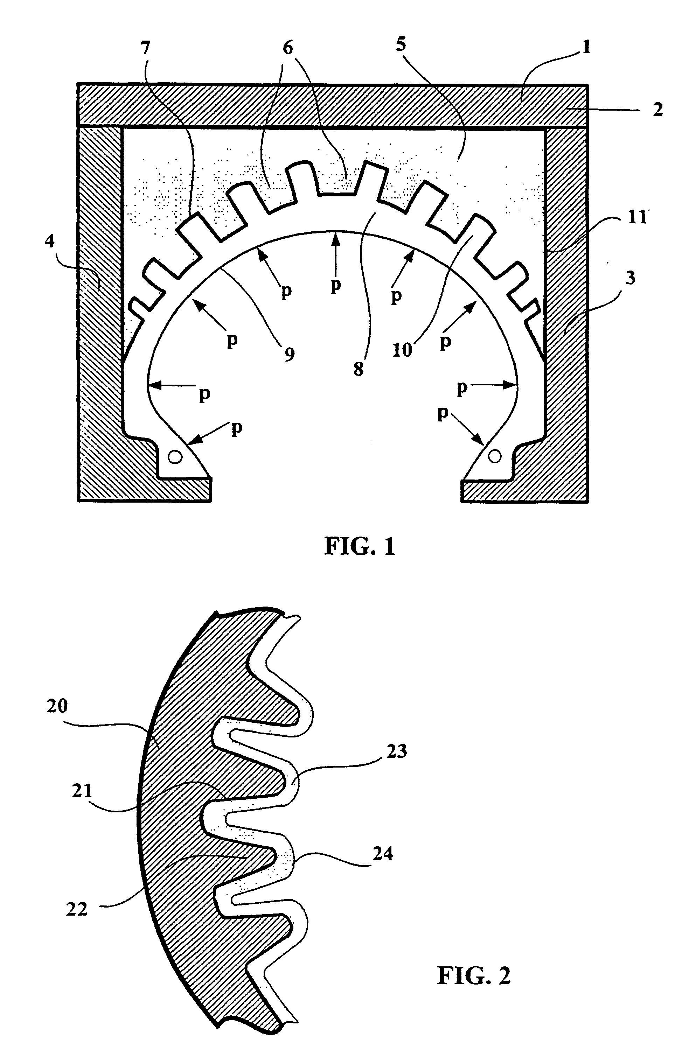

La figure 1 montre une coupe méridienne d'un moule selon l'invention et comprenant une partie rigide formant une enveloppe extérieure 1 de moule et une partie formant une garniture 5 pour le moulage d'un pneumatique de type VTT (c'est-à-dire pour un vélo tout terrain). Sur cette figure 1, on distingue que l'enveloppe extérieure 1 se compose de trois parties assemblées entre elles : deux parties forment des coquilles de moule 3 et 4 et sont destinées au moulage des flancs d'un pneumatique 8 et une troisième partie forme une enveloppe cylindrique 2 placée radialement à l'extérieur des coquilles 3 et 4. Dans la position de moulage représentée, les coquilles 3, 4 et l'enveloppe cylindrique 2 après assemblage présentent un volume interne délimité par une surface intérieure 11. Il est en outre disposé à l'intérieur de ce volume interne une couronne formant la garniture 5 réalisée dans un élastomère de silicone (dans l'exemple présenté l'élastomère de silicone de référence RTV 1552 de Silicone Rhodia a été employé). Cette garniture 5 est montée à l'intérieur de l'enveloppe externe 1 de façon à ce qu'une partie de sa surface pourvue de motifs de relief 6 constitue une partie de la surface de moulage 7 du moule destinée à mouler la surface extérieure du pneumatique 8.

La figure 1 montre le pneumatique 8 dans la configuration de moulage, la pression de moulage p s'exerçant sur la surface intérieure 9 dudit pneumatique, de manière à mouler la bande de roulement 10 contre les reliefs de la garniture 5. Ce pneumatique de type VTT pourvu d'une pluralité de reliefs de hauteur relativement importante pose en règle générale des problèmes d'esthétique (présence de très nombreux picots résultant de éventation et parfois moulage imparfait) qui sont ici totalement résolus par la présence de la garniture 5 en élastomère de silicone qui permet à la fois une évacuation homogène de l'air initialement compris entre le bandage et la surface de moulage et l'obtention d'une bonne qualité de l'état de surface du pneumatique moulé.

Par commodité, on peut envisager la réalisation d'une garniture en élastomère de silicone en plusieurs éléments distincts formant chacun des secteurs et destinés à être assemblés lors de la mise en place à l'intérieur de l'enveloppe externe rigide; les plans de joint ainsi formés sont favorables à l'évacuation de l'air.

Une rigidité comprise entre 40 et 60 Shore A est préférée pour le matériau constituant la garniture pour faciliter localement des déformations dudit matériau lors du moulage et en particulier lors de la phase d'évacuation de l'air entre le moule et le bandage (une faible dureté favorise en fait la circulation de l'air emprisonné). La valeur testée est de 50 Shore A.

Une variante de réalisation d'un moule selon l'invention consiste, après avoir réalisé un moule dans un matériau métallique rigide, ledit moule étant pourvu de motifs de relief sur sa surface de moulage, à recouvrir ladite surface et lesdits motifs avec une couche d'épaisseur appropriée d'un élastomère de silicone. Par appropriée, on entend une couche dont la capacité d'absorption d'air est suffisante pour absorber en quasi totalité le volume d'air occlus entre le pneumatique à mouler et le moule (ce qui n'est absolument pas le cas des revêtements décrits par exemple dans le document GB 840,883 présenté plus haut.

Cette variante est illustrée par la figure 2 sur laquelle on distingue, en coupe, une partie d'un moule 20 destinée au moulage d'un motif décoratif sur un flanc de pneumatique.

La partie de moule 20 comporte sur sa surface de moulage 21 un motif décoratif formé d'une pluralité de reliefs 22; cette partie 20 est réalisée par moulage sur une forme - non représentée - comportant les reliefs que l'on souhaite obtenir sur la surface extérieure du flanc d'un pneumatique. Sur cette partie de moule 20, il a été déposé par coulée gravitaire une épaisseur d'élastomère de silicone formant une couche 23 d'épaisseur sensiblement uniforme et recouvrant l'ensemble des reliefs du moule. La surface libre 24 de cette couche 23 forme une nouvelle surface de moulage contre laquelle est moulée la surface externe d'un pneumatique.

Il est également proposé un procédé d'obtention d'un moule destiné au moulage d'un pneumatique,
- ce moule étant pourvu d'une surface de moulage présentant au moins une sculpture, ladite sculpture étant composée d'une pluralité de reliefs, ce moule ayant une rigidité appropriée pour pouvoir équilibrer les efforts résultant de la mise en pression interne dans le bandage destinée au moulage dudit bandage contre la surface de moulage ; ce procédé étant caractérisé en ce qu'il comprend une étape selon laquelle :
- on revêt la surface de moulage, au moins sur la partie de sculpture, avec un élastomère de silicone pour former une couche dont la surface libre est destinée à former une nouvelle surface de moulage contre laquelle est moulé le bandage, ladite couche étant apte à absorber en quasi totalité l'air occlus entre le pneumatique à mouler et la surface de moulage du moule pendant l'opération de moulage.

Selon le procédé proposé, il est à la portée de l'homme du métier de choisir l'épaisseur la mieux adaptée pour la couche d'élastomère afin d'obtenir les conditions optimales d'éventation et bien entendu d'en tenir compte dans les dimensions initiales du moule rigide.

Le procédé d'amélioration de l'éventation d'un moule de pneumatique peut en outre être encore amélioré en réalisant une pluralité de traits de coupe dans la couche d'élastomère de silicone.

Les principaux avantages d'un moule selon l'invention réside dans le faible coût de réalisation d'un moule (les élastomères de silicone étant d'un prix de revient faible ce qui est largement compensé par la suppression de la réalisation d'orifices d'éventation) et la facilité de réalisation compte tenu des caractéristiques physiques des élastomères de silicone (matériau coulable et facilement moulable).

À noter qu'il est également intéressant, après un nombre plus ou moins important de moulages de pneumatiques, de pouvoir refaire des garnitures en élastomère de silicone par simple déposition ou moulage sur une forme de base; cette disposition se révèle très efficace pour maintenir une excellente qualité d'état de surface des pneumatiques moulés, ce qui n'est pas toujours le cas dans un moule de l'art antérieur pour lequel on constate un encrassement des motifs et des orifices d'éventation nécessitant une rénovation à la fois coûteuse et délicate.

Ce qui a été ici décrit s'applique sans difficulté pour l'homme du métier à la fabrication de bandes de roulement destinées par exemple au rechapage de pneumatiques.

## Revendications

1. Moule pour le moulage d'un pneumatique présentant une surface extérieure (10) pourvue d'au moins une sculpture, ce moule présentant, dans la configuration de moulage, un volume interne délimité par une surface de moulage (7) apte à mouler la surface extérieure du pneumatique (10), cette surface de moulage étant pourvue d'une pluralité de reliefs (6) pour le moulage de la sculpture sur ladite surface extérieure du pneumatique, ce moule comportant une enveloppe externe de moule (1) ayant une rigidité appropriée pour pouvoir équilibrer les efforts résultant de la mise en pression interne dans le bandage, ledit bandage correspondant au pneumatique (8) dans son état non moulé et non vulcanisé, ladite pression étant destinée à mouler par pressage le bandage contre la surface de moulage du moule (7), et au moins une garniture (5) réalisée dans un élastomère de silicone, disposée à l'intérieur de l'enveloppe externe de moule de façon à remplir au moins une partie du volume interne délimité par l'enveloppe externe (1) et présentant une surface de moulage formant une partie au moins de la surface de moulage du moule pour mouler une sculpture sur la surface externe du pneumatique, ce moule étant **caractérisé en ce que** ladite garniture est apte à absorber en quasi totalité l'air occlus entre le pneumatique à mouler et la surface de moulage du moule pendant l'opération de moulage.

2. Moule selon la revendication 1 **caractérisé en ce que** l'élastomère de silicone de la garniture (5) a une dureté comprise entre 40 et 60 Shore A.

3. Moule selon la revendication 2 **caractérisé en ce que** l'élastomère de silicone de la garniture (5) a une dureté égale à 50 Shore A.

4. Moule selon l'une des revendications 1 à 3 **caractérisé en ce qu'**il est en outre réalisé dans la garniture (5) en élastomère de silicone une pluralité de traits de coupe de largeur nulle ou quasi nulle destinés à accroître encore l'évacuation de l'air présent entre le bandage et la surface de moulage du moule.

5. Moule selon l'une des revendications 1 à 4 **caractérisé en ce que** la sculpture moulée par la garniture forme la sculpture de la bande de roulement du pneumatique.

6. Procédé d'obtention d'un moule destiné au moulage d'un pneumatique, ce moule étant pourvu d'une surface de moulage (22) présentant au moins une sculpture, ladite sculpture étant composée d'une pluralité de reliefs (23), ce moule ayant une rigidité appropriée pour pouvoir équilibrer les efforts résultant de la mise en pression interne dans le bandage destinée au moulage dudit bandage contre la surface de moulage, ce procédé étant **caractérisé en ce qu'**il comprend une étape selon laquelle ladite surface de moulage (22) est revêtue, au moins sur la partie de sculpture, avec un élastomère de silicone pour former une couche (24) dont la surface libre est destinée à former une nouvelle surface de moulage (25) contre laquelle est moulé le bandage, ladite couche étant apte à absorber en quasi totalité l'air occlus entre le pneumatique à mouler et la surface de moulage du moule pendant l'opération de moulage.

7. Procédé d'obtention d'un moule destiné au moulage d'un pneumatique selon la revendication 6, **caractérisé en ce qu'**il est en outre réalisé une pluralité de traits de coupe dans la couche (24) d'élastomère de silicone.

## Patentansprüche

1. Form zum Abformen eines Luftreifens, der eine äußere Oberfläche (10) aufweist, die mit mindestens einem Profil versehen ist, wobei die Form im formbereiten Zustand ein Innenvolumen aufweist, das von einer Formoberfläche (7) begrenzt wird, die geeignet ist, die äußere Oberfläche des Luftreifens (10) zu formen, wobei die Formoberfläche mit einer Vielzahl von Reliefelementen (6) zum Formen des Profils an der äußeren Oberfläche des Luftreifens versehen ist, wobei die Form eine äußere Hülle der Form (1) mit einer Steifigkeit, die zum Ausgleich der Kräfte geeignet ist, die sich aus dem Anstieg des Innendrucks in dem Reifenrohling ergeben, wobei der Rohling dem Luftreifen (8) in seinem nicht geformten und unvulkanisierten Zustand entspricht, wobei der Druck durch Pressen des Rohling gegen die Formoberfläche der Form (7) zum Formen dient, und mindestens einen Einsatz (5) aufweist, der aus einem Siliconelastomer hergestellt ist, der im Inneren der äußeren Hülle der Form so angebracht ist, dass er mindestens einen Teil des durch die äußere Hülle (1) begrenzten Innenvolumens ausfüllt, und der eine Formoberfläche besitzt, die zum Abformen eines Profils an der äußeren Oberfläche des Luftreifens zumindest einen Teil der Formoberfläche der Form bildet, wobei die Form **dadurch gekennzeichnet ist, dass** der Einsatz befähigt ist, die zwischen dem zu formenden Luftreifen und der Formoberfläche der Form eingeschlossene Luft während des Formvorgangs fast vollständig zu absorbieren.

2. Form nach Anspruch 1, **dadurch gekennzeichnet, dass** das Siliconelastomer des Einsatzes (5) eine Härte von 40 bis 60 Shore A aufweist.

3. Form nach Anspruch 2, **dadurch gekennzeichnet, dass** das Siliconelastomer des Einsatzes (5) eine Härte von 50 Shore A aufweist.

4. Form nach einem der Ansprüche 1 bis 3, **dadurch gekennzeichnet, dass** an dem Einsatz (5) aus Siliconelastomer ferner eine Vielzahl von Schnitten angebracht werden, die keine oder fast keine Breite besitzen und dazu vorgesehen sind, die Entlüftung der zwischen dem Rohling und der Formoberfläche der Form enthaltenen Luft noch zu verbessern.

5. Form nach einem der Ansprüche 1 bis 4, **dadurch gekennzeichnet, dass** das mit dem Einsatz geformte Profil das Profil des Laufstreifens eines Luftreifens bildet.

6. Verfahren zur Herstellung einer Form, die zum Formen eines Luftreifens vorgesehen ist, wobei die Form mit einer Formoberfläche (22) versehen ist, die mindestens ein Profil aufweist, wobei das Profil aus einer Vielzahl von Reliefelementen (23) besteht, wobei die Form eine Steifigkeit aufweist, die zum Ausgleich der Kräfte geeignet ist, die durch den Anstieg des Innendrucks in dem Reifenrohling resultieren, der dazu dient, den Reifenrohling gegen die Formoberfläche abzuformen, wobei das Verfahren **dadurch gekennzeichnet ist, dass** es einen Schritt umfasst, in dem die Formoberfläche (22) zumindest in dem Bereich des Profils mit einem Siliconelastomer überzogen wird, um eine Schicht (24) zu bilden, deren freie Oberfläche dazu vorgesehen ist, eine neue Formoberfläche (25) zu bilden, gegen die der Rohling geformt wird, wobei die Schicht befähigt ist, die zwischen dem zu formenden Luftreifen und der Formoberfläche der Form eingeschlossene Luft während des Formvorgangs fast vollständig zu absorbieren.

7. Verfahren zur Herstellung einer Form zum Formen eines Luftreifens gemäß Anspruch 6, **dadurch gekennzeichnet, dass** außerdem eine Vielzahl von Schnitten in der Schicht (24) des Siliconelastomers angebracht werden.

## Claims

1. A mould for moulding a tyre having an outer surface (10) provided with at least one tread pattern, this mould having, in the moulding configuration, an internal volume defined by a moulding surface (7) capable of moulding the outer surface of the tyre (10), this moulding surface being provided with a plurality of reliefs (6) for moulding the tread pattern on said outer surface of the tyre, this mould comprising an external mould casing (1) having an appropriate rigidity to balance the forces resulting from the internal pressurisation in the raw tyre, said raw tyre corresponding to the tyre (8) in its non-moulded and non-vulcanised state, said pressure being intended to mould the raw tyre against the moulding surface of the mould (7) by pressing, and at least one lining (5) made from a silicone elastomer and arranged within the external mould casing so as to fill at least part of the internal volume defined by the external casing (1) and having a moulding surface forming part at least of the moulding surface of the mould for moulding a tread pattern on the outer surface of the tyre, this mould being **characterised in that** said lining is capable of absorbing virtually all the air trapped between the tyre to be moulded and the moulding surface of the mould during the moulding operation.

2. A mould according to Claim 1, **characterised in that** the silicone elastomer of the lining (5) has a hardness of between 40 and 60 Shore A.

3. A mould according to Claim 2, **characterised in that** the silicone elastomer of the lining (5) has a hardness of 50 Shore A.

4. A mould according to one of Claims 1 to 3, **characterised in that** there is furthermore produced in the lining (5) of silicone elastomer a plurality of cutting lines of a width of zero or almost zero intended to increase still further the evacuation of the air present between the raw tyre and the moulding surface of the mould.

5. A mould according to one of Claims 1 to 4, **characterised in that** the tread pattern moulded by the lining forms the tread pattern of the tread of the tyre.

6. A process for obtaining a mould intended for moulding a tyre, this mould being provided with a moulding surface (22) having at least one tread pattern, said tread pattern being composed of a plurality of reliefs (23), this mould having an appropriate rigidity to balance the forces resulting from the internal pressurisation in the raw tyre intended for moulding said raw tyre against the moulding surface, this process being **characterised in that** it comprises a step in which said moulding surface (22) is coated, at least on the tread pattern part, with a silicone elastomer to form a layer (24) the free surface of which is intended to form a new moulding surface (25) against which the raw tyre is moulded, said layer being capable of absorbing virtually all the air trapped between the tyre to be moulded and the moulding surface of the mould during the moulding operation.

7. A process for obtaining of a mould intended for moulding a tyre according to Claim 6, **characterised in that** a plurality of cutting lines is furthermore produced in the layer (24) of silicone elastomer.
